# EUROPÄISCHE PATENTSCHRIFT

(11) **EP 2 038 618 B1**
(45) Veröffentlichungstag und Bekanntmachung des Hinweises auf die Patenterteilung: **04.05.2016**
(21) Anmeldenummer: 07857665.9
(22) Anmeldetag: 17.12.2007
(51) Int. Cl.: G01D 5/347, B62D 15/02, G01B 21/22

(54) **OPTISCHER LENKWINKELSENSOR ZUR BESTIMMUNG DES ABSOLUTWERTES DES LENKWINKELS**
OPTICAL STEERING ANGLE SENSOR FOR DETERMINING THE ABSOLUTE VALUE OF THE STEERING ANGLE
DÉTECTEUR OPTIQUE D'ANGLE DE DIRECTION DESTINÉ À DÉTERMINER LA VALEUR ABSOLUE DE L'ANGLE DE DIRECTION

(30) Priorität: 20.12.2006 DE 102006061929
(43) Veröffentlichungstag der Anmeldung: 25.03.2009
(73) Patentinhaber: Takata AG, 63743 Aschaffenburg (DE)
(72) Erfinder: MÜLLER, Horst, 61197 Florstadt (DE); FRANZ, Holger, 63875 Mespelbrunn (DE); SAUERWEIN, Thomas, 63868 Grosswallstadt (DE); STOLLBERG, Markus, 63868 Grosswallstadt (DE)
(74) Vertreter: Maikowski & Ninnemann
(86) Internationale Anmeldenummer: PCT/EP2007/064034
(87) Internationale Veröffentlichungsnummer: WO 2008/074763

(56) Entgegenhaltungen:
- DE-A1- 10 041 507
- DE-A1- 19 758 104
- DE-U1-202004 014 849
- DE-U1-202005 001 887
- JP-A- 2006 058 173

## Beschreibung

Die Erfindung betrifft einen optischen Lenkwinkelsensor zur Bestimmung des Absolutwertes des Lenkwinkels nach dem Oberbegriff des Anspruchs 1.

Lenkwinkelsensoren zur Bestimmung des Absolutwertes des Lenkwinkels sind in unterschiedlichen Ausführungsformen bekannt. So ist aus der DE 20 2005 001 887 U1 eine mechanisch-magnetische Drehwinkelmessvorrichtung mit einer spiralförmigen Kulissenführung zur Bestimmung des absoluten Drehwinkels bekannt. In die Kulissenführung greift ein Auslenkelement ein, das über eine Verzahnung mit einem Drehelement verbunden ist, dessen Drehung mittels eines Magneten bestimmt wird. Mit dieser Vorrichtung können Mehrfachumdrehungen unabhängig von der Versorgungsspannung erkannt werden. Diese Vorrichtung weist zur Messung eines Drehwinkels in einem eingeschränkten ersten Messbereich ebenfalls eine magnet-mechanische Vorrichtung mit Verzahnungselementen auf.

Weiterhin sind neben der Mehrfachumdrehungserkennung mittels eines Getriebes oder mit einer Magnetanordnung, die unabhängig von der Versorgungsspannung Mehrfachumdrehungen erkennt, wie sie aus den DE 20 2004 014 849 U1 und JP 2006 058173A bekannt ist, auch Lenkwinkelsensoren bekannt, bei denen der Absolutwert des Lenkwinkels mittels einer optischen Anordnung bestimmt wird. So ist aus der DE 100 41 507 A1 ein Lenkwinkelsensor für Kraftfahrzeuge bekannt, bei dem an einer von zwei zueinander verdrehbaren Baugruppen eine Codespur vorgesehen ist und bei dem eine Erfassungseinrichtung zur Abtastung der Codespur vorgesehen ist, die der anderen Baugruppe zugeordnet ist und die bei Abtastung der Codespur ein Signal erzeugt, aus dem der Lenkwinkel bestimmbar ist.

Dieser Lenkwinkelsensor weist den Nachteil auf, dass zwar ein Lenkwinkel immer erkannt wird, sofern das Lenkrad nicht mehr als eine Umdrehung gedreht wird. Eine Mehrfachumdrehungserkennung ist aber nur solange möglich, wie die Versorgungsspannung eingeschaltet ist. Wurde diese ausgeschaltet, z.B. beim Parken, ist dieser Lenkwinkelsensor also nicht in der Lage, die tatsächliche Anzahl von Lenkradumdrehungen nach dem Einschalten der Zündung zu erkennen.

Diesen Nachteil weist auch der absolut optische Winkelsensor der DE 197 58 104 A1 auf.

Der Erfindung liegt deshalb die Aufgabe zugrunde, bei Lenkwinkelsensoren, bei denen auf Grund ihrer Bauart nach dem Einschalten der Zündung die tatsächliche Anzahl von Lenkradumdrehungen nicht erkennbar ist, eine Zusatzvorrichtung vorzusehen, die das Erkennen von mehreren Umdrehungen unabhängig von der Versorgungsspannung ermöglicht.

Erfindungsgemäß wird das gemäß den Merkmalen des Anspruchs 1 erreicht.

Bei einem optischen Lenkwinkelsensor zur Bestimmung des Absolutwertes des Lenkwinkels auch bei Mehrfachumdrehungen eines Lenkrades, mit einem Stator, einem Rotor mit Barcode sowie einer Auswerteelektronik, ist erfindungsgemäß vorgesehen, dass der Rotor zur Ermittlung der Umdrehungen eine schneckenförmig angeordnete Spurrille aufweist, der am Stator ein Mitnahmefinger zugeordnet ist, der in die Spurrille eingreift und schwenkbar in einem Lager angeordnet ist, und der eine Aufnahme für einen mit dem Mitnahmefinger schwenkbaren Magneten aufweist, dem ein in einer Auswerteschaltung vorgesehener stationärer Hallsensor zugeordnet ist, und dass zur Eliminierung der an einer Lenkradspindel auftretenden radialen Toleranzen zusätzlich eine Kompensationsspur am Rotor vorgesehen ist, die als konzentrische Rille ausgebildet ist, und der am Stator ein in die Rille eingreifender Schieber zugeordnet ist, der linear über den Hall-Sensor bewegbar ist, wobei die Verschiebelänge des Schiebers größer ist als die Radialtoleranz der Lenkspindel.

Bei dieser Vorrichtung wird also der Winkel, um den der Mitnahmefinger in der Spurrille geschwenkt wird, mittels des sich mitschwenkenden Magneten und des Hallsensors erfasst. Da der Mitnahmefinger nach Abschaltung der Versorgungsspannung in seiner Stellung bleibt, wird eine Mehrfachumdrehung nach Wiedereinschaltung der Zündung erkannt.

Die Aufnahme für den Magneten ist vorzugsweise im Lagerkreis des Mitnahmefingers vorgesehen und der Magnet ist direkt über dem Hallsensor angebracht. Als Magnet ist vorzugsweise ein Permanentmagnet vorgesehen, der so gelagert ist, dass dessen Nord- und Südpol den gleichen Abstand zum Hallsensor aufweisen. Diese Polung dreht sich in Abhängigkeit von der Lage des Mitnahmefingers. Der Hallsensor detektiert diese Lage und bestimmt daraus den absoluten Lenkwinkel über 360° hinaus.

Die Spurrille ist vorzugsweise so ausgelegt, dass der Mitnahmefinger bei acht Umdrehungen des Rotors einmal von einem Ende der Spurrille bis an deren anderes Ende bewegbar ist. Der Mitnahmefinger ist dabei so angeordnet, dass der Winkel, der bei der Bewegung des Mitnahmefingers durch die Spurrille überstrichen wird, so groß ist, dass eine Erkennung von acht Umdrehungen des Rotors möglich ist, dass der Winkel aber nicht größer als 90° ist.

In der konzentrischen Rille wird der Schieber so geführt, dass seine Lage bezüglich der Mitte des Rotors mit der Spurrille immer gleich ist. Da der Schieber durch die konzentrische Rille in seiner radialen Lage fixiert ist, wirkt sich eine Exzentrizität der Lenkspindel nicht aus.

Bei dem erfindungsgemäßen Lenkwinkelsensor zur Ermittlung des absoluten Lenkwinkels weist der Rotor an seinem Umfang einen über einen Winkelumfang von 360° angebrachten Barcode für die Ermittlung des Lenkwinkels innerhalb einer Umdrehung auf.

Der Stator ist vorzugsweise als Leiterplatte ausgebildet, die zumindest teilweise die Auswerteelektronik aufweist.

Die Erfindung soll in Ausführungsbeispielen anhand von Zeichnungen erläutert werden. Es zeigen:
- Fig. 1: eine Explosionsdarstellung der Komponenten der erfindungsgemäßen Vorrichtung in einer ersten Ausführungsform;
- Fig. 2: den Rotor mit der Spurrille und dem Mitnahmefinger;
- Fig. 3: eine Explosionsdarstellung der Komponenten der erfindungsgemäßen Vorrichtung in einer zweiten Ausführungsform;
- Fig. 4: einen Schnitt durch den Rotor nach Fig. 3.

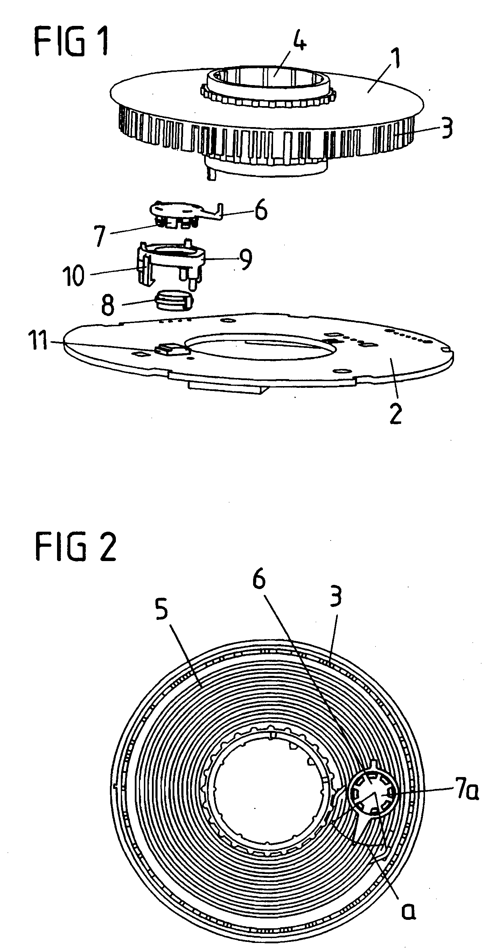

Die wesentlichen Komponenten einer erfindungsgemäßen Vorrichtung in einer ersten Ausführungsform sind in der Fig. 1 dargestellt. Die Vorrichtung weist einen Rotor 1 und einen Stator 2 auf. Am Umfang des Rotors 1 ist in bekannter Weise ein Barcode 3 vorgesehen, der sich über die gesamten 360° des Umfangs erstreckt, Mit diesem Code wird der absolute Drehwinkel einer Lenkspindel innerhalb einer vollständigen Umdrehung von 360° bestimmt. Die Lenkspindel ist in der Fig. 1 nicht dargestellt. Sie durchdringt einen konzentrischen Durchbruch 4 des Rotors. Der Rotor weist eine Spurrille 5 auf (Fig. 2), in die ein Mitnahmefinger 6 eingreift. Dieser weist eine Aufnahme 7 für einen Magneten 8 auf, der im Lagerkreis 7a des Mitnahmefingers gelagert ist. Der Mitnahmefinger 6 ist in einem Lager 9 schwenkbar gelagert. Dieses Lager ist stationär auf dem Stator 2 angeordnet und ist dort beispielsweise mittels Rastelementen 10 befestigt, von denen in der Fig. 1 nur ein Element erkennbar ist. Dem Magneten 8 ist auf dem Stator 2 ein Hall-Sensor 11 zugeordnet, wobei der Magnet 8 direkt über dem Hallsensor 11 angeordnet ist.

Die in der Fig. 2 dargestellte Lage des Mitnahmefingers 6 entspricht in etwa der Stellung des nicht dargestellten Lenkrades bei Geradeausfahrt. Bei Drehung des Lenkrades in eine Richtung schwenkt der Mitnahmefinger 6 je nach dem, ob die Spurrille 5 von innen nach außen im Uhrzeigersinn oder entgegengesetzt verläuft, nach innen oder außen. Bei Drehung des Lenkrades in die andere Richtung schwenkt der Mitnahmefinger 6 in die entgegengesetzte Richtung. Dabei schwenkt der Magnet 8 mit. Diese Schwenkung wird vom Hall-Sensor 11 erfasst und in der Auswerteelektronik einer bestimmten Anzahl von Umdrehungen zugeordnet. Der Mitnahmefinger 6 behält nach Ausschaltung der Zündung und damit Unterbrechung der Versorgungsspannung seine momentane Lage bei. Diese ist auch nach erneuter Zündung noch unverändert, so dass über den Hall-Sensor 11 die Anzahl der Umdrehungen des Lenkrades unmittelbar nach der Zündung erkannt wird. Da der absolute Lenkwinkel innerhalb einer Umdrehung des Lenkrades mittels des Barcodes 3 nach Zündung, d.h. nach dem Einschalten der Versorgungsspannung ebenfalls wieder erkannt wird, steht der absolute Lenkwinkel auch bei Mehrfachumdrehung des Lenkrades unmittelbar nach dem Einschalten der Versorgungsspannung zur Verfügung. Wie aus der Fig. 2 erkennbar ist, ist der Mitnahmefinger 6 so angeordnet, dass der Winkel a, der bei der Bewegung des Mitnahmefingers 6 durch die Spurrille 5 überstrichen wird, so groß ist, dass eine Erkennung von acht Umdrehungen des Rotors möglich ist, dass der Winkel aber nicht größer als 90° ist.

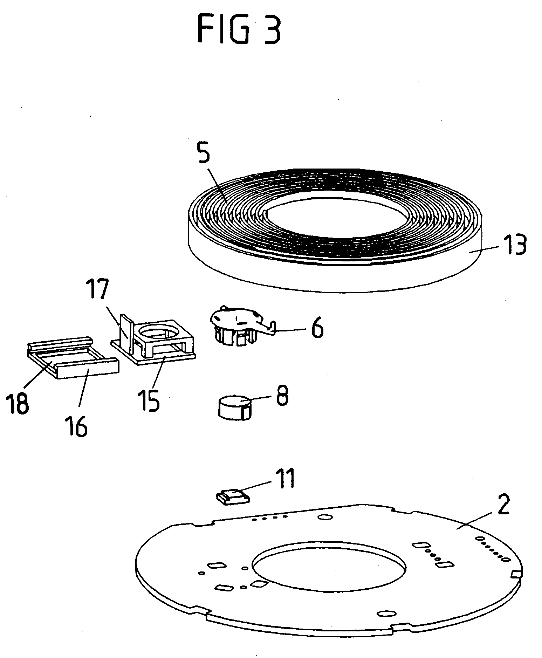

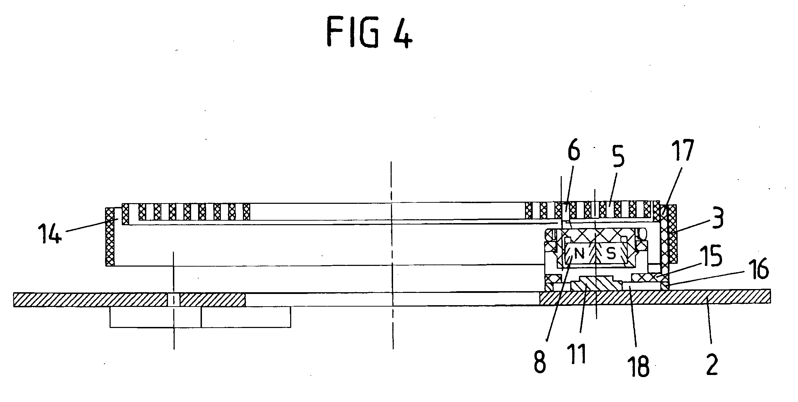

Bei der Ausführungsform der Fig. 3 ist ein Rotor 13 vorgesehen, der sich vom Rotor 1 der ersten Ausführungsform dadurch unterscheidet, dass er eine zusätzliche konzentrische, rillenförmige Spur 14 aufweist, die aus der Fig. 4 erkennbar ist. Dieser Spur 14 ist ein Schieber 15 zugeordnet, der sich geradlinig in einer Führung 16 bewegen kann, die auf dem Stator 2 befestigt ist. Der Schieber 15 weist einen Mitnehmer 17 auf, der in die Spur 14 eingreift. Der Schieber 15 ist auch als Lager für den Mitnahmefinger 6 ausgebildet, in dem wie bei der ersten Ausführungsform der Magnet 8 gelagert ist. Dieser ist wie bei der ersten Ausführungsform direkt über dem Hall-Sensor 11 angeordnet, der seinerseits innerhalb des Freiraums 18 der Führung 16 auf dem Stator 2 befestigt ist. Der Schieber 15 kann sich somit linear über den Hall-Sensor 11 bewegen.

Da der Schieber 15 durch die konzentrische rillenförmige Spur 14 in seiner radialen Lage bezüglich des Rotors 13 fixiert ist, wirkt sich eine Exzentrizität der Lenkspindel nicht aus, d.h., dass der Mitnahmefinger 6 in der Spurrille 5 nicht klemmen kann. Eine Exzentrizität der Lenkspindel würde lediglich dazu führen, dass sich der Schieber 15 in der Führung 16 und damit auch gegenüber dem Hall-Sensor 11 radial verschiebt. Da es sich dabei aber nur um geringe Verschiebungen handelt, wird die Erfassung der Mehrfachumdrehung durch den Hall-Sensor nicht beeinflusst.

## Patentansprüche

1. Optischer Lenkwinkelsensor zur Bestimmung des Absolutwertes des Lenkwinkels auch bei Mehrfachumdrehungen eines Lenkrades, mit einem Stator, einem Rotor mit Barcode sowie einer Auswerteelektronik,
**dadurch gekennzeichnet,**
**dass** der Rotor (1, 13) zur Ermittlung der Umdrehungen eine schneckenförmig angeordnete Spurrille (5) aufweist, welcher am Stator (2) ein Mitnahmefinger (6) zugeordnet ist, der in die Spurrille (5) eingreift und schwenkbar in einem Lager (9, 15) angeordnet ist und der eine Aufnahme (7) für einen mit dem Mitnahmefinger (6) schwenkbaren Magneten (8) aufweist, dem ein in einer Auswerteschaltung vorgesehener stationärer Hall-Sensor (11) zugeordnet ist, und dass zur Eliminierung der an einer Lenkradspindel auftretenden radialen Toleranzen zusätzlich eine Kompensationsspur am Rotor (13) vorgesehen ist, die als konzentrische Rille (14) ausgebildet ist, und der am Stator (2) ein in die Rille (14) eingreifender Schieber (15) zugeordnet ist, der linear über den Hall-Sensor (11) bewegbar ist, wobei die Verschiebelänge des Schiebers (15) größer ist als die Radialtoleranz der Lenkspindel.

2. Lenkwinkelsensor nach Anspruch 1, **dadurch gekennzeichnet, dass** die Aufnahme (7) für den Magneten (8) im Lagerkreis (7a) des Mitnahmefingers (6) vorgesehen ist und dass der Magnet (8) direkt über dem Hall-Sensor (11) angebracht ist.

3. Lenkwinkelsensor nach Anspruch 1 oder 2, **dadurch gekennzeichnet, dass** als Magnet ein Permanentmagnet (8) vorgesehen ist, der so gelagert ist, dass dessen Nord- (N) und Südpol (S) den gleichen Abstand zum Hall-Sensor (11) aufweisen.

4. Lenkwinkelsensor nach mindestens einem der vorhergehenden Ansprüche, **dadurch gekennzeichnet, dass** die Spurrille (5) so ausgelegt ist, dass der Mitnahmefinger (6) bei acht Umdrehungen des Rotors (1, 13) einmal von einem Ende der Spurrille (5) bis an deren anderes Ende bewegbar ist.

5. Lenkwinkelsensor nach mindestens einem der vorhergehenden Ansprüche, **dadurch gekennzeichnet, dass** der Mitnahmefinger (6) so angeordnet ist, dass der Winkel (a), der bei der Bewegung des Mitnahmefingers (6) durch die Spurrille (5) überstrichen wird, so groß ist, dass eine Erkennung von acht Umdrehungen des Rotors (1, 13) möglich ist, dass der Winkel (a) aber nicht größer als 90° ist.

6. Lenkwinkelsensor nach mindestens einem der vorhergehenden Ansprüche, **dadurch gekennzeichnet, dass** der Rotor (1, 13) an seinem Umfang einen über einen Winkelumfang von 360° angebrachten Barcode (3) für die Ermittlung des Lenkwinkels innerhalb einer Umdrehung aufweist.

7. Lenkwinkelsensor nach mindestens einem der vorhergehenden Ansprüche, **dadurch gekennzeichnet, dass** der Stator (2) als Leiterplatte ausgebildet ist, die zumindest teilweise die Auswerteelektronik aufweist.

## Claims

1. An optical steering angle sensor for determining the absolute value of the steering angle even in the case of multiple revolutions of a steering wheel, having a stator, a rotor with barcode, and an evaluation electronics system,
**characterized**
**in that** the rotor (1, 13) has, for detecting revolutions, a track groove (5) which is arranged in a spiral manner, which has an associated driver finger (6) on the stator (2), which driver finger engages in the track groove (5) and is arranged in a bearing (9, 15) such that it can pivot, and has a holder (7) for a magnet (8) which can be pivoted with the driver finger (6) and which has an associated stationary Hall sensor (11) which is provided in an evaluation circuit, and in that a compensation track is additionally provided on the rotor (13) for eliminating the radial tolerances which occur at a steering wheel spindle, said compensation track being in the form of a concentric groove (14) and having, on the stator (2), an associated slide (15) which engages in the groove (14) and can move linearly over the Hall sensor (11), with the displacement length of the slide (15) being greater than the radial tolerance of the steering spindle.

2. The steering angle sensor as claimed in claim 1, **characterized in that** the holder (7) for the magnet (8) is provided in the bearing ring (7a) of the driver finger (6), and **in that** the magnet (8) is fitted directly over the Hall sensor (11).

3. The steering angle sensor as claimed in claim 1 or 2, **characterized in that** the magnet provided is a permanent magnet (8) which is mounted such that its north pole (N) and south pole (S) are at the same distance from the Hall sensor (11).

4. The steering angle sensor as claimed in at least one of the preceding claims, **characterized in that** the track groove (5) is designed such that the driver finger (6) can be moved once from one end of the track groove (5) to the other end for eight revolutions of the rotor (1, 13).

5. The steering angle sensor as claimed in at least one of the preceding claims, **characterized in that** the driver finger (6) is arranged such that the angle (a) which is covered as the driver finger (6) moves through the track groove (5) is so great that it is possible to identify eight revolutions of the rotor (1, 13), but that the angle (a) is not greater than 90°.

6. The steering angle sensor as claimed in at least one of the preceding claims, **characterized in that** the rotor (1, 13) has, on its circumference, a barcode (3) which is provided over an angle of 360°, for detecting the steering angle within one revolution.

7. The steering angle sensor as claimed in at least one of the preceding claims, **characterized in that** the stator (2) is in the form of a printed circuit board which at least partly comprises the evaluation electronics system.

## Revendications

1. Détecteur optique d'angle de direction destiné à déterminer la valeur absolue de l'angle de direction, également en cas de multiples rotations d'un volant, pourvu d'un stator, d'un rotor avec code à barres ainsi que d'une électronique d'évaluation, **caractérisé**
**en ce que** le rotor (1, 13) comprend pour la détermination des tours un sillon de guidage (5), disposé en forme de spirale, auquel est associé sur le stator (2) un doigt d'entraînement (6) qui est en prise dans le sillon de guidage (5) et est disposé de manière pivotante dans un palier (9, 15) et qui comprend un logement (7) pour un aimant (8) qui est pivotable avec le doigt d'entraînement (6) et auquel est associé un capteur à effet Hall (11) stationnaire prévu dans un circuit d'évaluation, et
**en ce que**, pour l'élimination des tolérances radiales apparaissant sur un axe du volant, il est prévu en outre sur le rotor (13) une voie de compensation qui est formée en tant que sillon (14) concentrique et à laquelle est associé sur le stator (2) un coulisseau (15) venant en prise dans le sillon (14) qui peut être déplacé linéairement au-dessus du capteur à effet Hall (11), la longueur de déplacement du coulisseau (15) étant plus grande que la tolérance radiale de l'axe du volant.

2. Détecteur d'angle de direction selon la revendication 1, **caractérisé en ce que** le logement (7) pour l'aimant (8) est prévu dans le palier circulaire (7a) du doigt d'entraînement (6) et **en ce que** l'aimant (8) peut être placé directement au-dessus du capteur à effet Hall (11).

3. Détecteur d'angle de direction selon la revendication 1 ou 2, **caractérisé en ce qu'**il est prévu, en tant qu'aimant, un aimant permanent (8) qui est logé de sorte que ses pôles nord (N) et sud (S) sont à la même distance du capteur à effet Hall (11).

4. Détecteur d'angle de direction selon au moins l'une quelconque des revendications précédentes, **caractérisé en ce que** le sillon de guidage (5) est conçu de sorte que, en cas de huit tours du rotor (1, 13), le doigt d'entraînement (6) puisse être déplacé une fois d'une extrémité du sillon de guidage (5) jusqu'à une autre extrémité.

5. Détecteur d'angle de direction selon au moins l'une quelconque des revendications précédentes, **caractérisé en ce que** le doigt d'entraînement (6) est disposé de sorte que l'angle (a), qui est parcouru lors du déplacement du doigt d'entraînement (6) le long du sillon de guidage (5), soit si grand qu'une détection de huit tours du rotor (1, 13) soit possible, mais que l'angle (a) ne soit pas supérieur à 90°.

6. Détecteur d'angle de direction selon au moins l'une quelconque des revendications précédentes, **caractérisé en ce que** le rotor (1, 13) comprend sur sa circonférence un code à barres (3) placé sur une plage angulaire de 360° pour la détermination de l'angle de direction à l'intérieur d'un tour.

7. Détecteur d'angle de direction selon au moins l'une quelconque des revendications précédentes, **caractérisé en ce que** le stator (2) est conçu en tant que plaque de circuit imprimé qui comprend au moins en partie l'électronique d'évaluation.
